# EUROPEAN PATENT APPLICATION

(11) **EP 4 847 351 A1**
(43) Date of publication of application: **02.12.2026**
(21) Application number: 24919895.3
(22) Date of filing: 27.11.2024
(51) Int. Cl.: B62D 25/20

(54) **LONGITUDINAL BEAM, FLOOR FRAME, FLOOR ASSEMBLY AND VEHICLE**

(30) Priority: 25.01.2024 CN 202420188617 U
(71) Applicant: BYD Company Limited, Shenzhen, Guangdong 518118 (CN)
(72) Inventor: ZHANG, Wei, Shenzhen, Guangdong 518118 (CN); YUAN, Ye, Shenzhen, Guangdong 518118 (CN); CHEN, Peng, Shenzhen, Guangdong 518118 (CN); CHEN, Li, Shenzhen, Guangdong 518118 (CN); GONG, Minyuan, Shenzhen, Guangdong 518118 (CN)
(74) Representative: Mathys & Squire
(86) International application number: PCT/CN2024/135047
(87) International publication number: WO 2025/156815

(57) **Abstract**

Provided are a longitudinal beam, a floor frame, a floor assembly, and a vehicle. The longitudinal beam includes a longitudinal beam body and a connecting structure, wherein the longitudinal beam body is configured to be connected to a floor, and the longitudinal beam body is configured as a straight longitudinal beam structure extending in a front-rear direction of a cab. The longitudinal beam body is configured like the straight longitudinal beam structure, so that there is no bent structure on the longitudinal beam body, making force transmission of the longitudinal beam body smoother and avoiding stress concentration, thus ensuring strength of the longitudinal beam body and improving safety performance of the longitudinal beam body. In addition, the straight longitudinal beam structure is simpler and also reduces production and manufacturing costs of the longitudinal beam body.

## Description

### CROSS REFERENCE TO RELATED APPLICATIONS

The present disclosure claims priority to Chinese Patent Application No. 202420188617.X, filed with the China National Intellectual Property Administration on January 25, 2024 and entitled "LONGITUDINAL BEAM, FLOOR FRAME, FLOOR ASSEMBLY, AND VEHICLE", which is incorporated herein by reference in its entirety.

### TECHNICAL FIELD

The present disclosure relates to the field of vehicle technologies, and specifically, to a longitudinal beam, a floor frame, a floor assembly, and a vehicle.

### BACKGROUND

In related technologies, due to factors such as seat arrangement and tilting requirements, a cab floor of a truck or cargo vehicle may have a raised structure. To adapt to the raised structure on the floor, a floor longitudinal beam configured to support the floor needs to be bent to conform to the raised structure. This results in problems such as poor force transmission and stress concentration at the bent portion of the longitudinal beam, thereby affecting quality of the longitudinal beam and reducing safety performance thereof.

### SUMMARY

An objective of the present disclosure is to provide a longitudinal beam, a floor frame, a floor assembly, and a vehicle. The longitudinal beam has smooth force transmission and no stress concentration, thereby improving safety performance thereof.

To achieve the foregoing objective, a first aspect of the present disclosure provides a longitudinal beam, including: a longitudinal beam body configured to be connected to a floor. The longitudinal beam body being configured as a straight longitudinal beam structure extending in a front-rear direction of a cab.

Optionally, the longitudinal beam body includes a first longitudinal beam segment, a second longitudinal beam segment, and a connecting structure. One side of the connecting structure is connected to the second longitudinal beam segment, and the other side of the connecting structure is configured to be connected to a raised region of the floor.

Optionally, the first longitudinal beam segment and/or the second longitudinal beam segment is configured as a channel beam structure having a U-shaped cross section.

Optionally, a first reinforcing structure for enhancing strength of the second longitudinal beam segment is disposed inside the second longitudinal beam segment.

Optionally, the first reinforcing structure is configured as a first reinforcing member having a U-shaped cross section, and outer side walls of two opposite sides of the first reinforcing member are attached and connected to inner walls of the second longitudinal beam segment, respectively.

Optionally, a first bent portion configured to be connected to the floor is formed on a side of each of two opposite side walls of the first longitudinal beam segment close to the floor.

Optionally, the connecting structure includes a connecting plate extending from a side edge of the second longitudinal beam segment in a direction away from the longitudinal beam body.

Optionally, a second reinforcing structure for enhancing supporting strength of the connecting plate is disposed on the connecting plate.

Optionally, the second reinforcing structure is configured as a protrusion portion, and the protrusion portion extends in a direction away from the longitudinal beam body.

Optionally, there are a plurality of protrusion portions disposed on at least one side of the connecting plate, and the protrusion portions are spaced apart in an extension direction of the longitudinal beam body.

Optionally, the connecting plate is formed with a second bent portion configured to be connected to the floor.

A second aspect of the present disclosure provides a floor frame, including: a front cross beam, a rear cross beam, and two spaced-apart longitudinal beams each connected to the front cross beam and the rear cross beam. The longitudinal beams are each configured like the foregoing longitudinal beam.

A third aspect of the present disclosure provides a floor assembly, including a floor and the foregoing floor frame. The floor includes a front floor, a middle floor, and a rear floor connected in sequence; and the front floor is connected to front ends of the longitudinal beams, the rear floor is connected to rear ends of the longitudinal beams, and the middle floor is connected to the connecting structure of the longitudinal beam body.

Optionally, the front floor and the rear floor are on the same plane, the middle floor includes an arc-shaped protrusion portion protruding toward a side away from the floor frame, and the arc-shaped protrusion portion is connected to the connecting structure of the longitudinal beam body.

A fourth aspect of the present disclosure provides a vehicle, including the foregoing floor assembly.

By using the foregoing technical solutions, the longitudinal beam body of the present disclosure is configured like the straight longitudinal beam structure, so that there is no bent structure on the longitudinal beam body, making force transmission of the longitudinal beam body smoother and avoiding stress concentration, thus ensuring strength of the longitudinal beam body and improving safety performance of the longitudinal beam body. In addition, the straight longitudinal beam structure is simpler and also reduces production and manufacturing costs of the longitudinal beam body.

Other features and advantages of the present disclosure are described in detail in the subsequent description of implementations.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is an axonometric view of a longitudinal beam according to an embodiment of the present disclosure;
FIG. 2 is a side view of a longitudinal beam according to an embodiment of the present disclosure;
FIG. 3 is a top view of a longitudinal beam according to an embodiment of the present disclosure;
FIG. 4 is a sectional view along a line B-B in FIG. 3;
FIG. 5 is a sectional view along a line C-C in FIG. 3;
FIG. 6 is an axonometric view of a floor according to an embodiment of the present disclosure;
FIG. 7 is a schematic diagram of a structure after a floor and longitudinal beams are connected according to an embodiment of the present disclosure;
FIG. 8 is a top view of a floor and longitudinal beams after connection according to an embodiment of the present disclosure; and
FIG. 9 is a sectional view along a line A-A in FIG. 8.

### DESCRIPTION OF EMBODIMENTS

The specific implementations of the present disclosure are described in detail below with reference to the accompanying drawings. It will be understood that the specific implementations described herein are merely intended to describe and explain the present disclosure and are not intended to limit the present disclosure.

In the present disclosure, unless otherwise stated, directional terms such as "inner" and "outer" refer to the inside and outside with respect to the contour of a corresponding component itself; and "front" and "rear" refer to the front and rear in a movement direction of a vehicle. In addition, the terms "first", "second" and the like used in the present disclosure are intended to distinguish one element from another element, and do not have an order or importance. In addition, when the following description relates to the accompanying drawings, unless otherwise indicated, same reference signs in different accompanying drawings represent the same or similar elements. The foregoing definitions are only used for explaining and illustrating the present disclosure, and will not be construed as limiting the present disclosure.

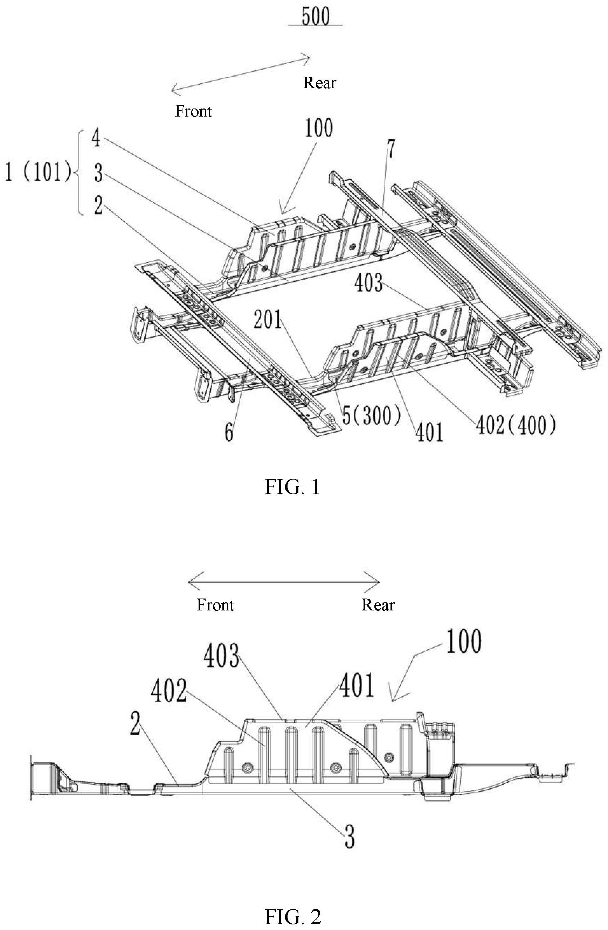

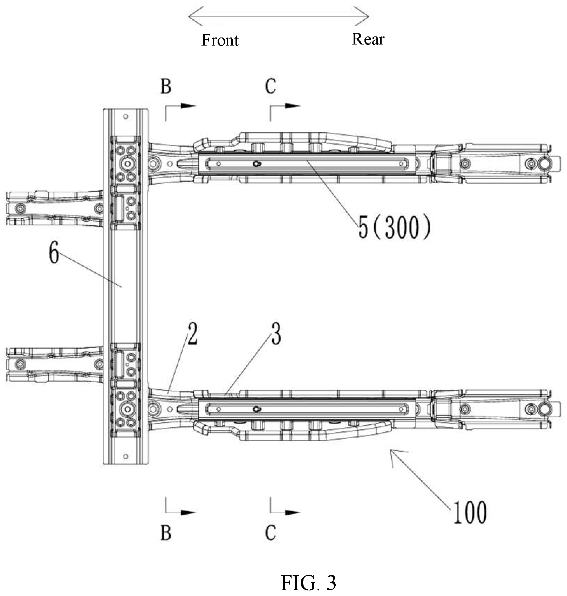

To achieve the foregoing objective, as shown in FIG. 1 to FIG. 9, a first aspect of the present disclosure provides a longitudinal beam 100, which is used for a truck or a cargo vehicle and includes a longitudinal beam body 1 configured to be connected to a floor 8. The longitudinal beam body 1 is configured as a straight longitudinal beam structure 101 extending in a front-rear direction of a cab. The straight longitudinal beam structure 101 can allow the longitudinal beam body 1 to have no bent structures, thereby making force transmission of the longitudinal beam body 1 smoother and avoiding stress concentration, thus ensuring strength of the longitudinal beam body 1 and improving safety performance of the longitudinal beam body 1. In addition, the straight longitudinal beam structure 101 is simpler and also reduces production and manufacturing costs of the longitudinal beam body 1.

In some implementations of the present disclosure, as shown in FIG. 1 and FIG. 2, the longitudinal beam body 1 may include a first longitudinal beam segment 2, a second longitudinal beam segment 3, and a connecting structure 4. One side of the connecting structure 4 is connected to the second longitudinal beam segment 3, and the other side of the connecting structure 4 is configured to be connected to a raised region of the floor 8. The second longitudinal beam segment 3 of the longitudinal beam body 1 is connected to the raised region of the floor 8 through the connecting structure 4, and the first longitudinal beam segment 2 is connected to the remaining non-raised region of the floor 8. In this way, the longitudinal beam body 1 can be stably connected to the floor 8 without requiring bending.

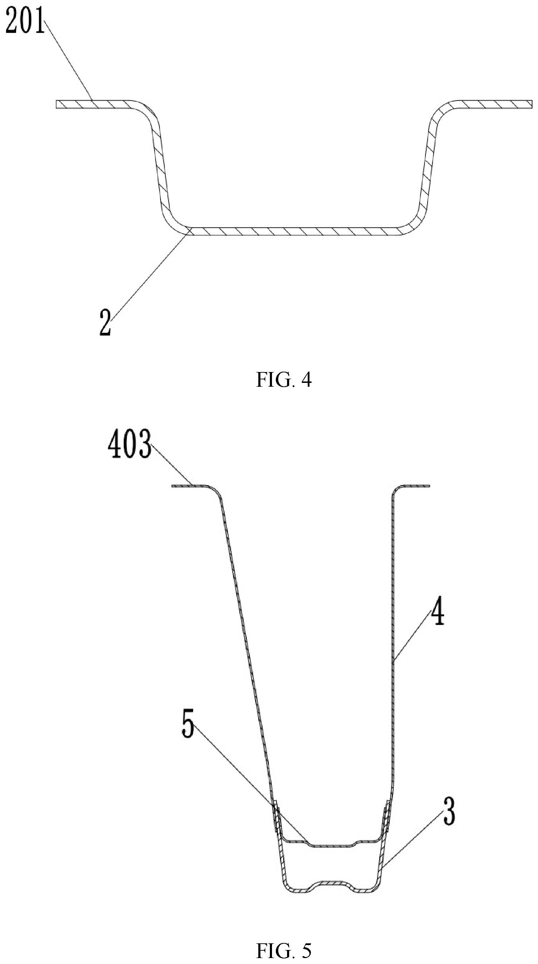

As shown in FIG. 4 and FIG. 5, the first longitudinal beam segment 2 and/or the second longitudinal beam segment 3 is configured as a channel beam structure having a U-shaped cross section. Compared with bent beams in related technologies, the U-shaped channel beam structure can better withstand forces in vertical and horizontal directions, making the entire structure more stable. In addition, the U-shaped channel beam uses relatively less material, has small springback deformation, and is easier to manufacture, thereby reducing production costs of the longitudinal beam body 1 and improving production quality of the longitudinal beam body 1 while reducing self-weight and facilitating production, transportation and installation.

In some implementations of the present disclosure, as shown in FIG. 1, FIG. 2, and FIG. 5, because the second longitudinal beam segment 3 corresponds to the raised region of the floor 8, that is, a position on the floor 8 where a seat is installed, safety performance of this part is particularly important. Therefore, a first reinforcing structure 300 for enhancing strength of the second longitudinal beam segment 3 is disposed inside the second longitudinal beam segment 3. In this way, when the second longitudinal beam segment 3 is impacted, the first reinforcing structure 300 can also reduce deformation of the longitudinal beam body 1 to some extent, thereby improving safety performance thereof.

In some implementations, the first reinforcing structure 300 may be configured as a first reinforcing member 5 having a U-shaped cross section, and outer side walls of two opposite sides of the first reinforcing member 5 are attached and connected to inner walls of the second longitudinal beam segment 3, respectively. This can facilitate connection of the first reinforcing member 5 to the second longitudinal beam segment 3 and stable connection of the first reinforcing member 5 to the second longitudinal beam segment 3 by means of welding or the like, so that the two stacked and welded U-shaped channel beam structures can greatly enhance strength of the second longitudinal beam segment 3.

Furthermore, the first reinforcing member 5 may be disposed in the second longitudinal beam segment 3 in various configurations. For example, one first reinforcing member 5 may be provided, which may extend from one end of the second longitudinal beam segment 3 to the other end of the second longitudinal beam segment 3. Alternatively, a plurality of first reinforcing members 5 may be provided, and the plurality of first reinforcing members 5 may be spaced apart within the second longitudinal beam segment 3. This is not limited in the present disclosure.

To facilitate connection between the longitudinal beam body 1 and the floor 8, as shown in FIG. 1 and FIG. 4, a first bent portion 201 configured to be connected to the floor 8 is formed on a side of each of two opposite side walls of the first longitudinal beam segment 2 close to the floor 8. The first bent portion 201 may include a flange bent toward an outer side of the first longitudinal beam segment 2, and a width of the flange may be adjusted according to actual situations. In the present disclosure, for example, the width of the flange may be configured as 25 mm, as long as a stable connection between the flange and the floor 8 can be achieved. The first bent portion 201 can not only increase the connection area between the first longitudinal beam segment 2 and the floor 8, thereby ensuring stability of the connection therebetween, but also increase strength of the first longitudinal beam segment 2 and improve anti-collision performance thereof.

In some implementations of the present disclosure, the connecting structure 4 may include a connecting plate 401 extending from a side edge of the second longitudinal beam segment 3 in a direction away from the longitudinal beam body 1. A top end of the connecting plate 401 is connected to the raised region of the floor 8, thereby eliminating a need for the longitudinal beam body 1 to be bent in order to be connected to the floor 8. To enhance supporting strength of the connecting plate 401 and further ensure stability of the connection between the longitudinal beam body 1 and the floor 8, a second reinforcing structure 400 for enhancing supporting strength of the connecting plate 401 may also be disposed on the connecting plate 401. The second reinforcing structure 400 may be configured as a protrusion portion 402, and the protrusion portion 402 extends in a direction away from the longitudinal beam body 1. It will be noted that the protrusion portion 402 may have various extension configurations. For example, the protrusion portion 402 may extend in a vertical direction, that is, be perpendicular to the longitudinal beam body 1, or may extend obliquely in a direction away from the longitudinal beam body 1. A plurality of protrusion portions 402 may be provided, and the plurality of protrusion portions 402 are disposed on at least one side of the connecting plate 401 and spaced apart in an extension direction of the longitudinal beam body 1. In some implementations not shown, a plurality of protrusion portions 402 extending obliquely may be disposed in a staggered configuration. This is not limited in the present disclosure.

Two connecting plates 401 may be provided, and the two connecting plates 401 are lap-joined to outer side walls of the second longitudinal beam segment 3, respectively. In this way, a quantity of support points between the second longitudinal beam segment 3 and the floor 8 can be increased, thereby ensuring stability of the connection between the longitudinal beam body 1 and the floor 8 to the greatest extent. It will be noted that a specific shape of the connecting plate 401 may be appropriately adjusted according to actual situations, to avoid interference with structures between the longitudinal beam 100 and the floor 8.

In some implementations, as shown in FIG. 5, the connecting plate 401 is formed with a second bent portion 403 configured to be connected to the floor 8. The second bent portion 403 is similar to the first bent portion 201, and the second bent portion 403 and the first bent portion 201 both increase the connection area between the floor 8 and the longitudinal beam body 1 by means of flanges, thereby ensuring stability of the connection therebetween.

According to a second aspect of the present disclosure, as shown in FIG. 1 to FIG. 3, a floor frame 500 is provided, including: a front cross beam 6, a rear cross beam 7, and two spaced-apart longitudinal beams 100 each connected to the front cross beam 6 and the rear cross beam 7. The longitudinal beams 100 are each configured like the foregoing longitudinal beam 100. The front cross beam 6 is connected to front ends of the two longitudinal beams 100, and the rear cross beam 7 is connected to rear ends of the two longitudinal beams 100. The front cross beam 6, the rear cross beam 7 and the two longitudinal beams 100 together form a frame structure that can be connected to the floor 8. The front cross beam 6 and the rear cross beam 7 can enhance the transverse strength of the floor frame 500, thereby ensuring overall stability and safety of the floor frame 500 after being connected to the floor 8. Certainly, to ensure a connection effect between the cross beams and the floor 8, a side of each of the cross beams close to the floor 8 may also be connected to the floor 8 through a bent portion having a flange.

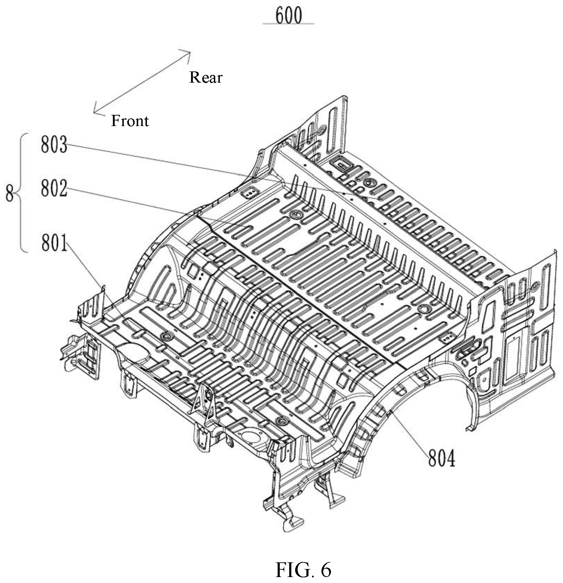

According to a third aspect of the present disclosure, as shown in FIG. 6, a floor assembly 600 is provided, including a floor 8 and the foregoing floor frame 500. The floor 8 includes a front floor 801, a middle floor 802, and a rear floor 803 connected in sequence. The front floor 801 is connected to front ends of the longitudinal beams 100, the rear floor 803 is connected to rear ends of the longitudinal beams 100, and the middle floor 802 is connected to the connecting structure 4 of the longitudinal beam body 1. The front floor 801 and the rear floor 803 are on the same plane, the middle floor 802 includes an arc-shaped protrusion portion 804 protruding toward a side away from the floor frame 500, and the arc-shaped protrusion portion 804 is connected to the connecting structure 4 of the longitudinal beam body 1, so that the entire floor 8 presents a generally Ω-shaped structure. It will be noted that, in the present disclosure, the front floor 801 corresponds to a foot pedal position of a vehicle, the middle floor 802 corresponds to a seat position, and the rear floor 803 corresponds to a storage compartment position. Therefore, the Ω-shaped floor 8 can utilize interior space of the vehicle to the greatest extent and increase design space for the storage compartment.

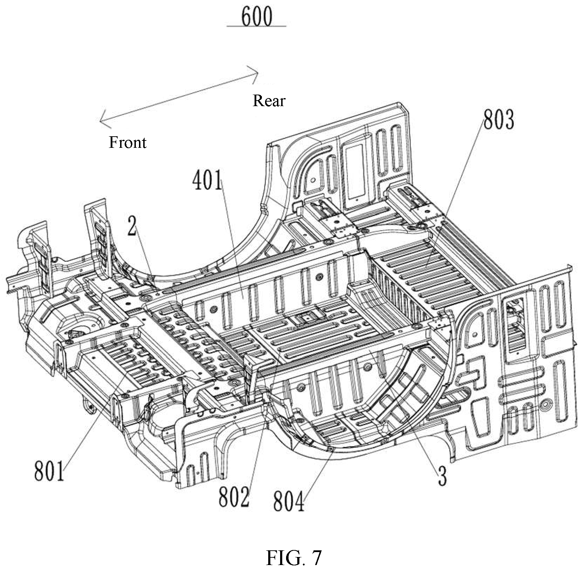

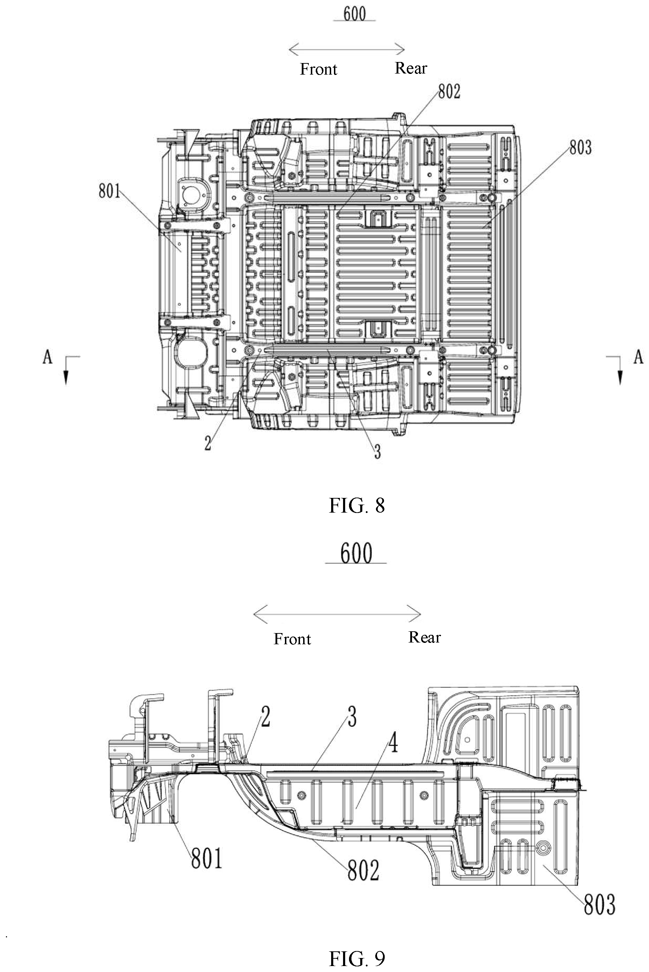

Because the floor 8 includes the front floor 801, the middle floor 802, and the rear floor 803, the longitudinal beam 100 may correspondingly have a front longitudinal beam at a front end thereof for further supporting the front floor 801, and a rear longitudinal beam at a rear end thereof for further supporting the rear floor 803. As shown in FIG. 7 and FIG. 8, the front longitudinal beams, the longitudinal beams 100, the rear longitudinal beams, and the cross beams together form the floor frame 500 that is connected to the floor assembly 600. In addition, to enhance strength of the front longitudinal beams and the rear longitudinal beams, the front longitudinal beams and the rear longitudinal beams may alternatively be configured as a U-shaped channel beam structure with a first reinforcing member 5 provided therein.

According to a fourth aspect of the present disclosure, a vehicle is provided, including the foregoing floor assembly 600. The vehicle includes a truck or a cargo vehicle, or may be a vehicle similar to a truck or a cargo vehicle.

In summary, a working principle of the present disclosure is as follows: when the longitudinal beam body 1 is connected to the floor assembly 600, the first longitudinal beam segment 2 of the longitudinal beam body 1 is connected to a non-raised region of the floor assembly 600 through the first bent portion 201, and the second longitudinal beam segment 3 is connected to the arc-shaped protrusion portion 804 of the floor assembly 600 through the second bent portion 403. In this way, the longitudinal beam body 1 can be connected to the floor assembly 600 without requiring bending, so that force transmission of the longitudinal beam body 1 is smoother and there is no stress concentration, thereby ensuring strength of the longitudinal beam body 1 and improving safety performance of the longitudinal beam body 1. In addition, the straight longitudinal beam structure 101 is simpler and also reduces production and manufacturing costs of the longitudinal beam body 1. Furthermore, the first reinforcing member 5 disposed in the second bent portion 403 and the protrusion portion 402 disposed on the connecting plate 401 can also strengthen the longitudinal beam body 1, thereby reducing deformation of the longitudinal beam body 1 and the floor assembly 600 when being subjected to an external force, and further improving strength and safety performance of the longitudinal beam body 1.

The foregoing describes in detail preferred implementations of the present disclosure with reference to the accompanying drawings. However, the present disclosure is not limited to specific details in the foregoing implementations. Within the scope of the technical concept of the present disclosure, a variety of simple modifications may be made to the technical solutions of the present disclosure, and these simple modifications all belong to the protection scope of the present disclosure.

Moreover, it will be noted that various specific technical features described in the particular implementations described above can be combined in any suitable manner without contradiction, and to avoid unnecessary repetition, various possible combinations are not separately explained in the present disclosure.

In addition, the various different implementations of the present disclosure may also be combined in any manner, and the combination will also be considered as content disclosed in the present disclosure provided that the combination does not deviate from the idea of the present disclosure.

## Claims

1. A longitudinal beam (100), comprising:
a longitudinal beam body (1), configured to be connected to a floor (8), the longitudinal beam body (1) being configured as a straight longitudinal beam structure (101) extending in a front-rear direction of a cab.

2. The longitudinal beam (100) according to claim 1, wherein the longitudinal beam body (1) comprises a first longitudinal beam segment (2), a second longitudinal beam segment (3), and a connecting structure (4), one side of the connecting structure (4) being connected to the second longitudinal beam segment (3), and the other side of the connecting structure (4) being configured to be connected to a raised region of the floor (8).

3. The longitudinal beam (100) according to claim 2, wherein the first longitudinal beam segment (2) and/or the second longitudinal beam segment (3) is configured as a channel beam structure having a U-shaped cross section.

4. The longitudinal beam (100) according to claim 2 or 3, wherein a first reinforcing structure (300) for enhancing strength of the second longitudinal beam segment (3) is disposed inside the second longitudinal beam segment (3).

5. The longitudinal beam (100) according to claim 4, wherein the first reinforcing structure (300) is configured as a first reinforcing member (5) having a U-shaped cross section, and outer side walls of two opposite sides of the first reinforcing member (5) are attached and connected to inner walls of the second longitudinal beam segment (3), respectively.

6. The longitudinal beam (100) according to any one of claims 2 to 5, wherein a first bent portion (201) configured to be connected to the floor (8) is formed on a side of each of two opposite side walls of the first longitudinal beam segment (2) close to the floor (8).

7. The longitudinal beam (100) according to any one of claims 2 to 6, wherein the connecting structure (4) comprises a connecting plate (401) extending from a side edge of the second longitudinal beam segment (3) in a direction away from the longitudinal beam body (1).

8. The longitudinal beam (100) according to claim 7, wherein a second reinforcing structure (400) for enhancing supporting strength of the connecting plate (401) is disposed on the connecting plate (401).

9. The longitudinal beam (100) according to claim 8, wherein the second reinforcing structure (400) is configured as a protrusion portion (402), and the protrusion portion (402) extends in a direction away from the longitudinal beam body (1).

10. The longitudinal beam (100) according to claim 9, wherein there are a plurality of protrusion portions (402) disposed on at least one side of the connecting plate (401), and the protrusion portions (402) are spaced apart in an extension direction of the longitudinal beam body (1).

11. The longitudinal beam (100) according to any one of claims 7 to 10, wherein the connecting plate (401) is formed with a second bent portion (403) configured to be connected to the floor (8).

12. A floor frame (500), comprising: a front cross beam (6), a rear cross beam (7), and two spaced-apart longitudinal beams (100) each connected to the front cross beam (6) and the rear cross beam (7), the longitudinal beams (100) being configured like the longitudinal beam according to any one of claims 1 to 11.

13. A floor assembly (600), comprising a floor (8) and the floor frame (500) according to claim 12, wherein
the floor (8) comprises a front floor (801), a middle floor (802), and a rear floor (803) connected in sequence; and the front floor is connected to front ends of the longitudinal beams (100), the rear floor is connected to rear ends of the longitudinal beams (100), and the middle floor (802) is connected to the connecting structure (4) of the longitudinal beam body (1).

14. The floor assembly (600) according to claim 13, wherein the front floor (801) and the rear floor (803) are on the same plane, the middle floor (802) comprises an arc-shaped protrusion portion (804) protruding toward a side away from the floor frame (500), and the arc-shaped protrusion portion (804) is connected to the connecting structure (4) of the longitudinal beam body (1).

15. A vehicle, comprising the floor assembly (600) according to claim 13 or 14.
